# EUROPEAN PATENT APPLICATION

(11) **EP 1 496 022 A1**
(43) Date of publication of application: **12.01.2005**
(21) Application number: 03743578.1
(22) Date of filing: 04.03.2003
(51) Int. Cl.: C03B 19/06, E01C 5/00

(54) **POROUS GLASS MOLDINGS AND METHOD FOR PRODUCTION THEREOF**

(30) Priority: 06.03.2002 JP 2002059775
(71) Applicant: BE Inc., Osaka-shi, Osaka 557-0003 (JP); EZ Bright Corporation, Neyagawa-shi, Osaka 572-0024 (JP)
(72) Inventor: OKAMOTO, Satoru, c/o BE INC., Osaka-shi, Osaka 531-0062 (JP)
(74) Representative: Wablat, Wolfgang, Dr.Dr.
(86) International application number: PCT/JP2003/002469
(87) International publication number: WO 2003/074437

(57) **Abstract**

An object is to provide porous glass moldings at reduced costs while attempting to efficiently utilize waste glass, which moldings are excellent in water permeability and water holding capability, as well as producing a decorative effect hardly seen conventionally. Glass cullets are produced by crushing waste glass such as colored bottles. Inorganic powder is bonded to the surfaces of the glass cullets that are in turn placed in a mold having a certain shape and fired at 700-800°C, thereby transforming glass into ceramic glass. This allows glass particles to be firmly united into a single piece via the ceramic glass while having pores therebetween.

## Description

### FIELD OF THE INVENTION

The present invention relates to porous glass moldings that are excellent in air permeability and water permeability so as to be usable as interlocking blocks of a sidewalk, or other building or construction materials, and more particularly porous glass moldings that are produced by utilizing waste glass of industrial wastes.

### BACKGROUND OF THE INVENTION

The utilization of waste glass of industrial wastes is hitherto disclosed in Japanese Patent Application Laid-open No. Hei-11-188711. This relates to a process of manufacturing glass-containing interlocking blocks, specific steps of which will be described below.

1st Step: Two types of kneaded mixtures of cement, water and aggregate are prepared at different mixing ratios respectively for a base layer and a surface layer. At this time, a proper amount of glass cullets of crushed waste glass are previously mixed into either one or both of the kneaded mixtures.

2nd Step: The kneaded mixtures for the base and surface layers each are further kneaded by a mixer.

3rd Step: High performance AE water reducing agent, an amount of which is adjusted to be proper to cement of the corresponding mixture, is put into each of the kneaded mixtures for the base and surface layers that have been subjected to the 2nd step, and then kneading is performed for a certain period of time while replenishing water.

4th Step: The kneaded mixtures for the base and surface layers that have been subjected to the 3rd step are respectively placed into feeding boxes.

5th Step: Of the kneaded mixtures for the base and surface layers that have been subjected to the 4th step, the kneaded mixture for the base layer is fed into a mold, to which primary pressure is applied, and then the kneaded mixture for the surface layer is fed into the mold, to which secondary pressure is applied. A molding is then released from the mold and placed on an iron pallet.

6th Step: The molding that has been subjected to the 5th step is placed in a curing room, then placed out therefrom after curing and stored on an earth floor.

The aforesaid conventional process of manufacturing glass moldings in the form of interlocking blocks by using waste glass involves many steps and troublesome works, and is therefore poor in productivity. Also, the quality is likely to be varied depending on the mixing ratio of the materials, kneading time or the like, causing a problem in that the uniform quality of products is hardly achieved.

Also, interlocking blocks manufactured as glass moldings by this process have poor water permeability and water holding capability, which cause problems of leading to a heat island phenomenon, an issue of concern in these days, having a damaging effect on vegetation or imposing an excessive burden on the environment.

It is an object of the present invention to address the above problems associated with the conventional glass moldings and the process of manufacturing the same.

### SUMMARY OF THE INVENTION

In order to achieve the above object, according to the present invention recited in claim 1, there is provided a porous glass molding, which is characterized in that it comprises glass particles being different in shape, color or the like derived from glass waste, in which the glass particles are coated with glass ceramic having acicular crystals dispersed therein and partially fused together via the glass ceramic with pores formed between the glass particles.

According to the present invention recited in claim 2, there is provided a process of manufacturing porous glass moldings, which includes bonding inorganic powder with an adhesive means to the surfaces of cullets obtained by crushing waste glass, and placing the cullets in a mold and firing the same at 700-800°C so as to have sharp edges of the cullets molten and glass of the surfaces of the cullets transformed into glass ceramic containing acicular crystals, thereby uniting glass particles of the cullets via the glass ceramic into a single piece.

Now, the description will be made for the porous glass moldings and the process of manufacturing the same according to the present invention.

In the present invention, as a material of the glass moldings, waste glass of industrial wastes is used. The waste glass may be derived from scrap cars, electric bulbs, fluorescent lamps or the like burned out and disposed of, empty bottles, or any one such as wine bottles, beer bottles, Braun tubes or eating utensils .

In manufacturing process, these glasses are crushed into fine glass particles (hereinafter referred to cullets) and then inorganic powder is bonded thereto with an adhesive means such as an adhesive agent so as to coat the surfaces of the cullets therewith.

As the inorganic powder, refuse ash, volcanic ash or the like may be efficiently utilized. Also, preferably used are those having, for example such a particle size enabling passing through a 200 mesh screen, or a particle size of about 100-150 µm.

Then, the cullets with the surfaces thus coated with the inorganic powder are placed in a separately prepared mold of such as an unglazed pottery having a specific shape, and fired in a furnace at a temperature of 700-800°C, which is slightly lower than a temperature at which conventional glass is molten. Whereby, only the surfaces of the cullets are softened, allowing sharp edges of the cullets to be rounded and the cullets themselves to be transformed into glass particles having different shapes, while the portions of the glass particles contacting each other are fused together and thus united into a single piece with pores formed between the glass particles.

At this time, the inorganic powder coated on the surfaces of the glass cullets undergoes a solid state reaction with glass located inward of the inorganic powder and acts in such a manner as to form acicular crystals in glass. Whereby, the glass particles each are coated with glass ceramic (crystallized glass) having a crystal phase dispersed in a glass matrix, and the portions of the glass particles contacting each other are fused together via the glass ceramic.

Thus, the porous glass moldings of the present invention preferably used for interlocking blocks, building materials and the like are manufactured.

A porous glass molding of the present invention thus manufactured has a large number of pores in glass and therefore is excellent in water permeability and water holding capability. Also, the surface, and the portions bonded together by fusion, of the molding are transformed into glass ceramic containing acicular crystals and therefore rigid bonding is attainable, making cracks hard to be propagated.

A porous glass molding of the present invention is produced from various waste glasses and therefore each glass particle may have a different coefficient of expansion. However these have the surfaces transformed into the glass ceramic, and therefore, even if a porous glass molding is made of glasses having different coefficients of expansion, it is possible to produce an effect of hardly causing cracks or breaks.

A porous glass molding of the present invention is produced from various waste glasses having different shapes and colors, and therefore produces itself a decorative effect in a sufficient manner even without performing any works such as coloring. During the manufacturing of the moldings, sharp edges of cullets are necessarily rounded and therefore the safety of the products is assured even without performing any finishing works.

As described above, the present invention recited in claim 1 is directed to the production of porous glass moldings by using glass particles derived from waste glasses having different shapes, colors and the like. This makes it possible to use colored bottles without any processing, unlike a conventional process which requires separating them for recycling. As a result, it is possible to produce effects of not only omitting inconvenience of separation and recovering for an improved recycling ratio, but also producing glass moldings having an excellent decorative effect by color, which is hardly seen conventionally.

The porous glass moldings of the present invention, which are excellent in water permeability and water holding capability, causes less effects on the environment and therefore can be widely used in the form of such as interlocking blocks of a sidewalk, building materials and the like.

Also, the porous glass moldings, each having glass particles transformed into glass ceramic and united into a single piece, is high in strength and has a bonding strength being hardly breakable even if it is produced from glass materials having different coefficients of expansion, thus producing excellent durability. While producing such effects, moldings no longer usable can be treated and recycled in the same manner as glass, since they are mostly produced from glass only without using bonding materials such as cement. Accordingly, they can be used as materials of glass moldings, thus realizing unlimited recycling.

According to the invention recited in claim 2, the porous glass moldings of claim 1 are manufactured by placing glass cullets with inorganic powders bonded thereon in a mold and filing the same at 700-800°C. This process greatly reduces the number of steps compared with a conventional process of manufacturing moldings from waste glass, omits the probability that the quality is varied depending on the mixing ratio of the materials, and hence enables efficiently manufacturing products of a uniform quality at reduced costs.

## Claims

1. A porous glass molding comprising glass particles being different in shape, color or the like derived from glass waste, in which the glass particles are coated with glass ceramic having acicular crystals dispersed therein and partially fused together via the glass ceramic with pores formed between the glass particles.

2. Aprocess of manufacturing porous glass moldings comprising bonding inorganic powder with an adhesive means to the surfaces of cullets obtained by crushing waste glass, and placing the cullets in a mold and firing the same at 700-800°C so as to have sharp edges of the cullets molten and glass of the surfaces of the cullets transformed into glass ceramic containing acicular crystals, thereby uniting glass particles of the cullets via the glass ceramic into a single piece.
